# EUROPÄISCHE PATENTSCHRIFT

(11) **EP 2 982 499 B1**
(45) Veröffentlichungstag und Bekanntmachung des Hinweises auf die Patenterteilung: **21.06.2017**
(21) Anmeldenummer: 15179609.1
(22) Anmeldetag: 04.08.2015
(51) Int. Cl.: B29C 71/02, B29C 47/04, B29C 47/10, B29C 47/88, B29C 47/90, E06B 3/22, B29L 31/00, B29C 47/00, B29K 27/06, B29C 35/08

(54) **VERFAHREN ZUR HERSTELLUNG VON HOHLKAMMERPROFILEN UND DEREN VERWENDUNG**
METHOD FOR PRODUCTION OF HOLLOW CHAMBER PROFILES AND THEIR USE
PROCEDE DE FABRICATION DE PROFILES A CHAMBRE CREUSE ET LEUR UTILISATION

(30) Priorität: 05.08.2014 EP 14179901
(43) Veröffentlichungstag der Anmeldung: 10.02.2016
(73) Patentinhaber: Profine GmbH, 53840 Troisdorf (DE)
(72) Erfinder: Keßler, Thorsten, 66919 Hermersberg (DE); Grewenig, Ralf, 66969 Lemberg (DE)
(74) Vertreter: Wübken, Ludger

(56) Entgegenhaltungen:
- EP-A1- 0 087 515
- EP-A2- 0 145 864
- WO-A1-2006/051084
- DE-A1- 2 535 286

## Beschreibung

Die Erfindung betrifft ein Verfahren zur Herstellung von Hohlkammerprofilen, wie sie insbesondere für die Herstellung von Fenstern und/oder Türen verwendet werden, und insbesondere von Hohlkammerprofilen aus Hart-PVC (PVC-u).

### Technisches Gebiet und Stand der Technik

Hohlkammerprofile aus PVC-u werden in großem Umfang für die Herstellung von Fenstern und Türen eingesetzt. Sie werden in der Regel mit co- oder post-coextrudierten Dichtungen ausgestattet. Üblicherweise weisen derartige Hohlkammerprofile eine große Innenkammer zur Aufnahme einer Stahlverstärkung auf. Die Stahlverstärkung ist bei Flügelgrößen ab ca. 1,2 m in der Regel notwendig, um Verformungen durch Windlasten und durch Temperatureinflüsse auf ein vertretbares Maß zu reduzieren.

Stahlverstärkungen verschlechtern jedoch die Wärmedämmeigenschaften von Fenstern und Türen signifikant. In den letzten Jahren werden daher zunehmend alternative Lösungen ohne Stahlverstärkung eingesetzt, insbesondere auch verklebte Verglasungen in Flügelrahmen. Die verklebte Verglasung versteift das Flügelrahmen-Element, so dass bis zu bestimmten Flügelgrößen auf eine Stahlverstärkung verzichtet werden kann.

Insbesondere bei farbig folierten oder lackierten Elementen, die bei dunklen Farben im Außeneinsatz durch Sonneneinstrahlung auf der Außenseite eine Oberflächentemperatur von über 65 °C erreichen können, kommt es bei Kunststofffenstern ohne Stahlverstärkung trotz verklebter Verglasungen unter Umständen zu unzulässigen Verformungen. Ursache hierfür sind eingefrorene Spannungen aus dem Extrusions- bzw. Kalibrierprozess bei der Herstellung der Hohlkammerprofile, die bei der Erwärmung durch Sonnenbestrahlung bei Temperaturen oberhalb von 60 °C freigesetzt werden.

Aus der WO 2006/051084 A1 ist ein Verfahren zur Herstellung eines Hohlkammerprofils im Coextrusionsverfahren bekannt, bei dem die der Sonnenbestrahlung ausgesetzte Außenwandung aus einem Kunststoff mit höherer Vicat-Erweichungstemperatur besteht. Dieses Verfahren ist jedoch sehr aufwendig und bedingt besondere Coextrusions-Werkzeuge.

Es ist grundsätzlich bekannt, bei Kunststoffprodukten eingefrorenen Spannungen durch einen Temperprozess, bei dem die Teile für einen längeren Zeitraum homogen auf eine Temperatur oberhalb der Vicat-Erweichungstemperatur erwärmt werden, vorzeitig freizusetzen. Allerdings können Hohlkammerprofile aus PVC-u, insbesondere wenn sie co- oder post-coextrudierte Dichtungen aufweisen, nicht im üblichen Temperverfahren behandelt werden, da durch einen solchen Prozess unkontrollierte Querschnitts-Formänderungen und insbesondere auch unzulässige Verformungen der Dichtungen auftreten, die eine Weiterverarbeitung bzw. Verwendung der Profile unmöglich machen würden. Weiterhin ist ein solches Temperverfahren äußerst energie- und zeitaufwändig.

### Aufgabe

Aufgabe der vorliegenden Erfindung ist es daher, ein Verfahren zur Herstellung von Hohlkammerprofilen aus thermoplastischem Kunststoff, insbesondere aus PVC-u, zur Verfügung zu stellen, das diese Nachteile vermeidet, so dass diese Profile für die Herstellung von Rahmen, insbesondere Flügelrahmen, ohne Stahlverstärkung verwendet werden können.

### Darstellung der Erfindung

Die Erfindung löst diese Aufgabe durch ein Verfahren nach Anspruch 1, bevorzugt in Verbindung mit einem oder mehreren der Merkmale der Unteransprüche, bzw. durch eine Verwendung nach Anspruch 7 oder 8.

Das erfindungsgemäße Verfahren umfasst daher zusätzlich zu den üblichen Verfahrensschritten - Extrudieren, Kalibrieren und Abkühlen - einen speziellen Temperprozess, der in vorteilhafter Weise kontinuierlich erfolgen kann. Wesentlich für diesen erfindungsgemäßen Temperprozess ist es, dass sowohl die äußere Sichtfläche als auch die innere Sichtfläche erwärmt werden, während zumindest der überwiegende Teil der anderen Profilbereiche nicht oder nicht wesentlich erwärmt wird. Es hat sich nämlich überraschend herausgestellt, dass es für die spätere Verwendung der erfindungsgemäß hergestellten Hohlkammerprofile nicht notwendig ist, die gesamten Hohlkammerprofile homogen zu erwärmen, sondern dass es vielmehr ausreicht, lediglich die äußere Sichtfläche, d. h. im Ergebnis die äußere Wandung des Hohlkammerprofils auf eine Temperatur zu erwärmen, bei der die eingefrorenen Spannungen freigesetzt werden, so dass bei einer späteren, im eingebauten Zustand durch Sonneneinwirkung erfolgenden nochmaligen Erwärmung der Profiloberfläche auf entsprechende Temperaturen eine erneute Freisetzung eingefrorener Spannungen wesentliche verringert wird. Die entsprechende Erwärmung der inneren Sichtfläche auf Temperaturen oberhalb der Vicat-Erweichungstemperatur wäre in dieser Beziehung eigentlich nicht notwendig, sie erfolgt erfindungsgemäß jedoch, um eine Durchbiegung des Profils bei der Erwärmung der äußeren Sichtfläche zu vermeiden. Da gleichzeitig wesentliche Profilbereiche nicht oder nicht wesentlich miterwärmt werden, bleibt die Maßhaltigkeit und Querschnittsgestalt des Profils als Ganzes gewährleistet.

Die Vicat-Erweichungstemperatur wird nach DIN EN ISO 306 nach dem Verfahren "B 50" ermittelt und liegt für PVC-u bei 77 °C.

Die bevorzugt gleichzeitige Erwärmung der äußeren Sichtfläche und der inneren Sichtfläche erfolgt nach einer besonders bevorzugten Ausführungsform der Erfindung durch Infrarotstrahlung, d. h. durch Strahler, der mit wesentlichen Anteilen ihres Energiespektrums im Infrarotbereich arbeiten. Bei Hohlkammerprofilen aus PVC-u wird die innere und die äußere Sichtfläche bei der Temperung auf eine Oberflächentemperatur von 80 °C bis 120 °C, bevorzugt auf 100 °C bis 110 °C erwärmt, so dass wesentliche Bereiche der Außen- und Innenwandung die kritische Vicat-Erweichungstemperatur erreichen. Bei Temperaturen oberhalb von 120 °C können bleibende Schäden der Oberfläche hervorgerufen werden, bei Temperaturen unterhalb von 80 °C würde der Aufheizvorgang der Außen- und Innenwandung zu lange Zeit in Anspruch nehmen.

Die Aufheizung erfolgt bevorzugt über einen Zeitraum von 5 - 60 s, insbesondere innerhalb von 10 - 20 s. Nach dieser Zeit sind die inneren Oberflächen der entsprechenden Wanderungen auf eine Temperatur von ca. 50 - 70 °C erwärmt, so dass die eingefrorenen Spannungen dieser Wandungen zumindest weitgehend abgebaut werden.

Eingesetzt wird das erfindungsgemäße Verfahren insbesondere bei Hohlkammerprofilen, die im Anschluss an die erfindungsgemäße Temperung auf der äußeren Sichtfläche farbig lackiert, foliert oder beschichtet werden. Bei Profilen mit farbiger Außensichtfläche, insbesondere mit relativ dunklen Farben, heizt sich diese äußere Oberfläche bei der späteren Verwendung als Fenster bzw. Tür durch Sonnenbestrahlung auf höhere Temperaturen auf. Durch das erfindungsgemäße Temperverfahren wird der hierdurch ausgelöste Schrumpf erheblich verringert, typischerweise auf weniger als 40 % desjenigen Schrumpfs, der bei sonst identischen, nicht erfindungsgemäß getemperten Profilen auftritt. Durch den verringerten Schrumpf verringert sich naturgemäß auch die hierdurch ausgelöste Biegung oder Verwindung der Profile bzw. der daraus hergestellten Elemente, so dass Konstruktionen auch ohne Stahlverstärkung bei größeren Elementen bzw. sehr große Elemente mit kleineren Stählen möglich sind. Besonders bevorzugt wird das erfindungsgemäße Verfahren bei Flügelrahmen eingesetzt, bei denen die Verglasung mit dem Rahmen verklebt und auf eine Stahlverstärkung verzichtet wird.

Ein wesentlicher Vorteil des erfindungsgemäßen Verfahrens liegt darin, dass die Temperung kontinuierlich erfolgen kann. Die zu tempernden Profile sind durch den Herstellprozess zwar schon abgelängt, üblicherweise auf Längen zwischen 5 und 7 m, sie können in einer geeigneten Anlage jedoch unmittelbar hintereinander auf eine Fördereinrichtung gelegt und somit kontinuierlich getempert werden. Dadurch, dass nach dem erfindungsgemäßen Verfahren die Aufheizung nur im Bereich der inneren und der äußeren Sichtfläche erfolgt, kühlen die Profile nach der erfindungsgemäßen Temperung sehr schnell wieder ab, so dass eine Weiterverarbeitung, insbesondere in einer anschließenden Folierung oder Lackierung, unproblematisch möglich ist.

Bevorzugt erfolgt die Erwärmung der äußeren und der inneren Sichtflächen mittels Infrarotstrahlung. Besonders bevorzugt sind sogenannte IR-Mittelwellenstrahler. Die notwendige Heizleistung kann durch einfache Versuche ermittelt werden. Bevorzugt wird eine Regelung der Heizleistung verwendet, wobei als Zielgröße die Oberflächentemperatur unmittelbar im Anschluss an die Strahler kontaktlos gemessen wird. So können Einflüsse wie Pigmentierung, Glanzgrad, Oberflächenbeschaffenheit, Alterung der Infrarotstrahler etc. zuverlässig ausgeglichen werden.

Soweit die eingesetzten Hohlkammerprofile im Querschnitt auf der inneren Sichtfläche und auf der äußeren Sichtfläche eine erheblich unterschiedliche Höhe aufweisen, kann es durch das asymmetrische Freisetzen von eingefrorenen Spannungen vorkommen, dass sich das Profil bei dem erfindungsgemäßen Temperverfahren zu der einen oder anderen Seite durchbiegt. Dem kann durch Beschränkung der Erwärmung durch Infrarotbestrahlung auf einen Teilbereich der inneren Sichtfläche oder der äußeren Sichtfläche oder durch Anpassung der Soll-Oberflächentemperatur der inneren Sichtfläche oder der äußeren Sichtfläche entgegengewirkt werden.

Ein besonderer Vorteil des erfindungsgemäßen Temperverfahrens liegt darin, dass auch Profile mit coextrudierten oder post-coextrudierten Dichtungen verarbeitet werden können. Soweit eine der Dichtungen im Strahlungsbereich der eingesetzten IR-Strahler liegen sollte, kann diese gegebenenfalls durch eine geeignete Abschirmung vor einer unzulässigen Erwärmung geschützt werden.

Besonders vorteilhaft ist die Verwendung eines nach einem der Ansprüche 1 bis 6 hergestellten Hohlkammerprofils zur Herstellung von Rahmen für Fenster oder Türen, bei denen die Rahmen keine Stahlverstärkung aufweisen. Bei diesem Verfahren werden zunächst nach einem der Ansprüche 1 bis 6 Hohlkammerprofile hergestellt, die anschließend zu Rahmen ohne Stahlverstärkung weiterverarbeitet werden. Die Verarbeitung der erfindungsgemäßen Hohlkammerprofile erfolgt dabei in üblicher Weise durch Verschweißen in den Gehrungsecken. Besonders vorteilhaft ist die Kombination in Verbindung mit einer in den Rahmen eingeklebten Verglasung.

### Bester Weg zur Ausführung der Erfindung und Vergleichsbeispiel Beispiel 1

Ein handelsübliches weißes Flügelrahmenprofil, Hersteller profine GmbH, System 88plus, Profiltyp 6212 wurde in üblicher Weise durch Extrudieren, Kalibrieren, anschließendes Abkühlen und Ablängen auf ein Stangenmaß von 6,50 m hergestellt. Diese Profile wurden in einer kontinuierlichen erfindungsgemäßen Temperanlage wie folgt behandelt:
Auf einem Rollenförderband wurden die Profile mit einer Ausgangstemperatur von 21 °C so aufgelegt und fixiert, dass die Innen- und Außensichtflächen jeweils senkrecht ausgerichtet sind. Die so fixierten Profile wurden mit konstanter Geschwindigkeit von 4 m pro Minute an einer Heizstrahler-Anordnung vorbeigeführt. Die Heizstrahler-Anordnung bestand aus je einem 1 m langen Carbon-IR-Strahler, Firma Heraeus, Typ M110/1188, an jeder Seite des Förderbandes in einem Abstand von ca. 4 cm zur jeweiligen Profiloberfläche. Die IR-Strahler weisen jeweils eine Nennleistung von 5,6. kW auf und strahlen im mittleren IR-Spektrum. Die Leistung der Strahler ist auf jeder Seite unabhängig voneinander regelbar. Unmittelbar nach dem Strahlerfeld wird auf beiden Seiten die Oberflächentemperatur kontaktlos gemessen und als Istgröße der Regeleinrichtung zugeführt. Die Regeleinrichtung regelt die Oberflächentemperatur der inneren Sichtfläche und der äußeren Sichtfläche unabhängig voneinander auf den Sollwert von 105 °C. Nach Verlassen des Strahlerfeldes kühlen die erhitzten Oberflächen der Profile an der Luft rasch ab.

Die weitgehend abgekühlten Profile wurden anschließend in herkömmlicher Weise an der Außenseite mit einer anthrazitfarbigen Folie kaschiert.

### Vergleichsbeispiel

In einem Vergleichsbeispiel wurden in identischer Weise zunächst weiße Profile des Typs 6212 hergestellt und die abgelängten Profilstangen ohne Zwischenschaltung des erfindungsgemäßen Temperschritts mit der gleichen anthrazitfarbigen Folie, wie sie im Beispiel 1 verwendet wurde, auf der Außenseite kaschiert.

Proben der nach Beispiel 1 und nach dem Vergleichsbeispiel hergestellten kaschierten Profile wurden anschließend ausschließlich auf der Außenseite mit einer künstlichen Lichtquelle auf 72 °C erwärmt. Nach dem Abkühlen auf Raumtemperatur wurden die Profile nach 24 h in Bezug auf ihre Krümmung vermessen. Das Ergebnis wurde in Tabelle 1 festgehalten.

Der Grad der Durchbiegung verringerte sich somit um mehr als 75 %. Die im erfindungsgemäßen Temperverfahren behandelten Profile konnten anschließend problemlos zu Flügelrahmen verarbeitet werden, bei denen die Verglasung in üblicher Weise durch Verkleben mit dem Rahmen verbunden wurde und bei denen auf eine Stahlverstärkung verzichtet werden konnte. Werden die nach dem Vergleichsbeispiel hergestellten Profile in gleicher Weise zu einem Flügelrahmen mit verklebter Verglasung und ohne Stahlverstärkung verarbeitet, ergeben sich bei entsprechender Sonneneinstrahlung unzulässige Durchbiegungen des Flügelrahmens, so dass das Fenster nicht mehr verschlossen werden konnte.

**Tabelle 1**

| | Krümmung vor Tempern [mm] | Krümmung nach Tempern [mm] | Krümmung nach einseitiger Erwärmung auf 72 °C [mm] |
|---|---|---|---|
| Beispiel 1 | 0,1 | 0,1 | 0,4 |
| Vergleichsb. | 0,1 | entfällt | 2,1 |

| | | | |
|---|---|---|---|
| Krümmung: Durchbiegung eines 1 m langen Stabes | | | |

## Patentansprüche

1. Verfahren zur Herstellung von Hohlkammerprofilen,
- die mehrere Hohlkammern, eine äußere Sichtfläche und eine innere Sichtfläche aufweisen,
- bei dem ein thermoplastischer Kunststoff zu dem Hohlkammerprofil extrudiert, kalibriert, abgekühlt und anschließend getempert wird,
**dadurch gekennzeichnet, dass** die Temperung durch Erwärmen der äußeren Sichtfläche und der inneren Sichtfläche wenigstens in Teilbereichen derart erfolgt, dass die äußere Sichtfläche und die innere Sichtfläche in erwärmten Teilbereichen eine Temperatur oberhalb der Vicat-Erweichungstemperatur des thermoplastischen Kunststoffs erreicht und der überwiegende Teil der anderen Profilbereiche eine Temperatur unterhalb der Vicat-Erweichungstemperatur aufweist.

2. Verfahren nach Anspruch 1, **dadurch gekennzeichnet, dass** eine gleichzeitige Erwärmung der äußeren Sichtfläche und der inneren Sichtfläche bei der Temperung durch Infrarotstrahlung auf eine Oberflächentemperatur von 80 °C bis 120 °C, insbesondere auf 100 °C bis 110 °C erfolgt.

3. Verfahren nach Anspruch 1 oder 2, **dadurch gekennzeichnet, dass** die Erwärmung der äußeren Sichtfläche und der inneren Sichtfläche bei der Temperung innerhalb von 5 bis 60 s, insbesondere innerhalb von 10 bis 20 s erfolgt.

4. Verfahren nach einem der Ansprüche 1 bis 3, **dadurch gekennzeichnet, dass** die Hohlkammerprofile nach der Temperung auf der äußeren Sichtfläche farbig lackiert, foliert oder beschichtet werden.

5. Verfahren nach einem der Ansprüche 1 bis 4, **dadurch gekennzeichnet, dass** die Temperung kontinuierlich erfolgt.

6. Verfahren nach einem der Ansprüche 1 bis 5, **dadurch gekennzeichnet, dass** die Hohlkammerprofile bei der Temperung coextrudierte oder post-coextrudierte Dichtungen aufweisen.

7. Verfahren zur Herstellung von Rahmen für Fenster oder Türen, wobei zunächst nach einem der Ansprüche 1 bis 6 Hohlkammerprofile hergestellt und diese zu den Rahmen weiterverarbeitet werden, wobei die Rahmen keine Stahlverstärkung aufweisen.

8. Verfahren nach Anspruch 7, **dadurch gekennzeichnet, dass** in den Rahmen eine Verglasung eingeklebt wird.

## Claims

1. Method for producing hollow-chamber profiles,
- which have a plurality of hollow chambers, an outer visible surface and an inner visible surface,
- in which a thermoplastic is extruded to form the hollow-chamber profile, calibrated, cooled and heat-treated,
**characterized in that** the heat treatment takes place by heating the outer visible surface and the inner visible surface at least in subregions in such a way that the outer visible surface and the inner visible surface reach a temperature in heated subregions above the Vicat softening temperature of the thermoplastic and the predominant part of the other profile regions has a temperature below the Vicat softening temperature.

2. Method according to Claim 1, **characterized in that** simultaneous heating of the outer visible surface and of the inner visible surface takes place during the heat treatment by infrared radiation to a surface temperature of 80°C to 120°C, in particular to 100°C to 110°C.

3. Method according to Claim 1 or 2, **characterized in that** the heating of the outer visible surface and of the inner visible surface during the heat treatment takes place within from 5 to 60 s, in particular within from 10 to 20 s.

4. Method according to one of Claims 1 to 3, **characterized in that**, after the heat treatment, the hollow-chamber profiles are provided on the outer visible surface with a coloured finish, a film or a coating.

5. Method according to one of Claims 1 to 4, **characterized in that** the heat treatment takes place continuously.

6. Method according to one of Claims 1 to 5, **characterized in that** the hollow-chamber profiles have coextruded or post-coextruded seals during the heat treatment.

7. Method for producing frames for windows or doors, wherein hollow-chamber profiles are first of all produced according to one of Claims 1 to 6 and they are further-processed to form the frames, wherein the frames have no steel reinforcement.

8. Method according to Claim 7, **characterized in that** a glazing unit is adhesively bonded into the frame.

## Revendications

1. Procédé de fabrication de profilés à chambres creuses,
- qui présentent plusieurs chambres creuses, une face visible extérieure et une face visible intérieure,
- dans lequel on extrude, on calibre, on refroidit et finalement on recuit une matière plastique thermoplastique en un profilé à chambres creuses,
**caractérisé en ce que** l'on effectue le recuit par chauffage de la face visible extérieure et de la face visible intérieure au moins dans des régions partielles, de telle manière que la face visible extérieure et la face visible intérieure atteignent dans les régions partielles chauffées une température supérieure à la température de ramollissement Vicat de la matière plastique thermoplastique et que la majeure partie des autres régions du profil présentent une température inférieure à la température de ramollissement Vicat.

2. Procédé selon la revendication 1, **caractérisé en ce que** l'on effectue un chauffage simultané de la face visible extérieure et de la face visible intérieure lors du recuit par un rayonnement infrarouge à une température de surface de 80°C à 120°C, en particulier de 100°C à 110°C.

3. Procédé selon la revendication 1 ou 2, **caractérisé en ce que** l'on effectue le chauffage de la face visible extérieure et de la face visible intérieure lors du recuit à l'intérieur d'une durée de 5 à 60 s, en particulier de 10 à 20 s.

4. Procédé selon l'une quelconque des revendications 1 à 3, **caractérisé en ce qu'**on laque en couleur, on pose un film ou on revêt les profilés à chambres creuses sur la face visible extérieure après le recuit.

5. Procédé selon l'une quelconque des revendications 1 à 4, **caractérisé en ce que** l'on effectue le recuit en continu.

6. Procédé selon l'une quelconque des revendications 1 à 5, **caractérisé en ce que** les profilés à chambres creuses présentent des joints d'étanchéité coextrudés ou post-coextrudés lors du recuit.

7. Procédé de fabrication de châssis pour des fenêtres ou des portes, dans lequel on fabrique d'abord des profilés à chambres creuses selon l'une quelconque des revendications 1 à 6 et on assemble ceux-ci en châssis, dans lequel les châssis ne présentent aucun renfort métallique.

8. Procédé selon la revendication 7, **caractérisé en ce que** l'on colle un vitrage dans le châssis.
